(19) Europäisches Patentamt / European Patent Office / Office européen des brevets

(11) **EP 1 830 200 A1**

(12) **EUROPEAN PATENT APPLICATION**

(43) Date of publication:
**05.09.2007 Bulletin 2007/36**

(51) Int Cl.:
***G01S 11/06*** (2006.01)

(21) Application number: **06290355.4**

(22) Date of filing: **02.03.2006**

| | |
|---|---|
| (84) Designated Contracting States: **AT BE BG CH CY CZ DE DK EE ES FI FR GB GR HU IE IS IT LI LT LU LV MC NL PL PT RO SE SI SK TR** Designated Extension States: **AL BA HR MK YU** (71) Applicant: **France Telecom S.A. 75015 Paris (FR)** | (72) Inventor: **Duda, Adrian Chiswick W4 2AQ London (GB)** (74) Representative: **Loisel, Bertrand Cabinet Plasseraud 52 rue de la Victoire 75440 Paris Cedex 09 (FR)** |

(54) **Method and system for speed estimation in a network**

(57)     The present invention provides an improved method and system for estimating the speed of a mobile user terminal within a wireless environment. Further, it also estimates the time when a mobile user terminal would reach a coverage border of the access point it is currently associated with. In particular, the invention is concerned with calculating a time (T) the terminal would take to move from a point A, after it has stopped making received signal level measurements, to another point B, at the coverage border of the access point, independently of any medium-specific parameters. This way, the invention enhances Quality of Service by properly estimating the speed and time and enabling a terminal, or an entity in the network, to take preemptive actions to ensure optimal QoS.

FIG. 1

Printed by Jouve, 75001 PARIS (FR)

## Description

### FIELD OF THE INVENTION

The invention relates to network mobility. In particular, the present invention relates to estimating the speed of a mobile terminal in a communications network.

### BACKGROUND OF THE INVENTION

With the proliferation of convergent services like voice over wireless LAN (VoWLAN), there is a need to better control the WLAN environment in order to provide an adequate quality of services to users.

Typically, various speed estimation methods have been advanced such as estimation processes where a given instant is used to estimate the impulse response as well the time derivative of the estimated impulse response of the transmission channel. With others, speed estimation is executed by establishing predetermined models to which further measurements are later compared. For example, US2002068581 describes a speed estimation method, which can be applied in cellular radio systems. In particular, the subscriber terminal speed is estimated by using a probability theory where the speed of the subscriber terminal is matched to a predetermined model that is based on measurements made within the area of the radio system and which is a cell-specific model.

However, none of these systems provide a satisfactory solution for wireless LAN systems. That is, these existing techniques are applied to estimate the speed of a mobile terminal in communication with a station via a transmission channel within a cellular network rather than a WLAN. One obvious disadvantage of these proposed methods are that they involve establishing a set of reference points within the networks, or predetermined models to which further measurements must be compared to. As a result, lack of quality of service, robustness, and increased costs contribute to the shortcomings faced in these existing techniques.

Therefore, in view of these concerns there is a continuing need for developing a new and improved method and system for efficient speed estimation which would avoid the disadvantages and above mentioned problems while being cost effective and simple to implement.

### SUMMARY OF THE INVENTION

Accordingly, it is an object of the present invention to provide an improved method and system to estimate the speed of a mobile user terminal, for example, within a WLAN environment. In particular, the invention includes a method of estimating the speed of a mobile user terminal when the terminal is positioned in a first point associated with one access point in a RF coverage radius, having a first distance between the first point and the access point, where the user terminal has a trajectory with the terminal experiencing a received signal level along the trajectory. The method includes performing periodic measurements of the received signal level of the terminal along the trajectory, where the received signal level comprises its strength indication. Then, determining a second point, which is the closest point of the terminal to the access point along the trajectory, where the second point includes a maximum value for the received signal level and next, computing the speed of the mobile user terminal.

One or more of the following features may also be included.

In one aspect of the invention, the method further computes a time when the mobile user terminal would reach the coverage border of the access point.

Embodiments may have one or more of the following advantages.

In order to compute time T, no assumptions are made about medium specific parameters or access point coverage. Therefore, advantageously, the time T is calculated so the result does not depend on the medium-specific parameters. This is performed irrespective of whether the mobile terminal is under a call with a station via a transmission channel, or only traverses the WLAN, without having a session open.

Furthermore, the invention advantageously enhances the fact that properly estimating the speed and time as mentioned above enables the terminal, or an entity in the network, to take preemptive actions to make sure the QoS experienced by the terminal is at an optimal level. Such actions may involve handing over the user terminal to a different network before the terminal is dangerously close to the coverage of the access point.

Additionally, in the present invention, the speed of a mobile terminal is estimated without making use of systems such as GPS, or of other methods requiring training processes, such as establishing certain reference points in the network whose locations are known. In other words, there is no need to maintain any "static" preconfigured set of points in the network to be used as reference for comparisons. Consequently, the speed of the terminal and the time when the terminal reaches the coverage border of the access point can be efficiently estimated with a high degree of accuracy since the method of estimating the speed and time does not involve any medium-specific parameters.

These and other aspects of the invention will become apparent from and elucidated with reference to the embodiments described in the following description, drawings and from the claims.

**BRIEF DESCRIPTION OF THE DRAWINGS**

FIG.1 illustrates a mobile user terminal diagram, illustrating the implementation of an improved method and system according to one of the embodiments of the present invention;
FIG. 2 is a graph illustrating the RSSI attenuation as a logarithmic function, according to one of the embodiments of the present invention; and
FIG. 3 is a flowchart of the improved method according to one of the embodiments of the present invention.

**DETAILED DESCRIPTION**

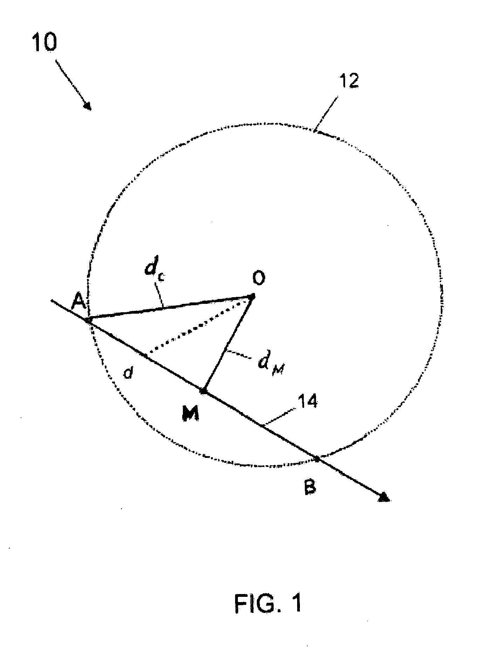

Referring to FIG. 1, a mobile user terminal diagram 10 is shown. In the diagram 10, a mobile user terminal is in a radio frequency coverage radius 12; following along a trajectory 14. A mobile terminal is initially attached to the access point "O" at point "A" and has a relatively straight trajectory in the direction $\overrightarrow{AB}$ (trajectory 14). The trajectory 14 can be approximated or interpolated to be a relatively in straight direction $\overrightarrow{AB}$. The point "B" represents the point coverage border of the access point "O". A point "M" represents the point along the trajectory 14 where an experienced received signal level value, for example, a Received Signal Strength Indication (hereinafter "RSSI") at the terminal is at its maximum, and $d_c$ represents the coverage of the access point "O", for implementing the process of speed estimation and time estimation within the known coverage radius 12.

Still referring to FIG. 1, the mobile user terminal performs periodic measurements of an experienced RSSI. As the mobile user terminal moves alongside $\overrightarrow{AB}$ along the trajectory 14, the experienced RSSI has the smallest value at point "A". As the user terminal approaches point "M", the experienced RSSI gradually increases. The RSSI increases at a higher pace when the mobile user terminal is closer to point M than when it is closer to point "A", and the RSSI tends to have a maximum value closest to point M. Consequently, as the mobile user terminal moves further away from point M towards point B, the experienced RSSI decreases.

The RSSI measurements are performed in the mobile user terminal until an irreversible decreasing change in the slope of the RSSI occurs. To this end, the signal must decrease for a certain length of time in order to determine where along the trajectory 14 the decreasing trend has started. This moment of irreversible change in the slope corresponds to point "M" as shown in FIG. 1. Smaller oscillations of the RSSI may be ignored and only the moment where the global decreasing trend has occurred is taken into consideration for purposes of determining where the decreasing trend has taken place.

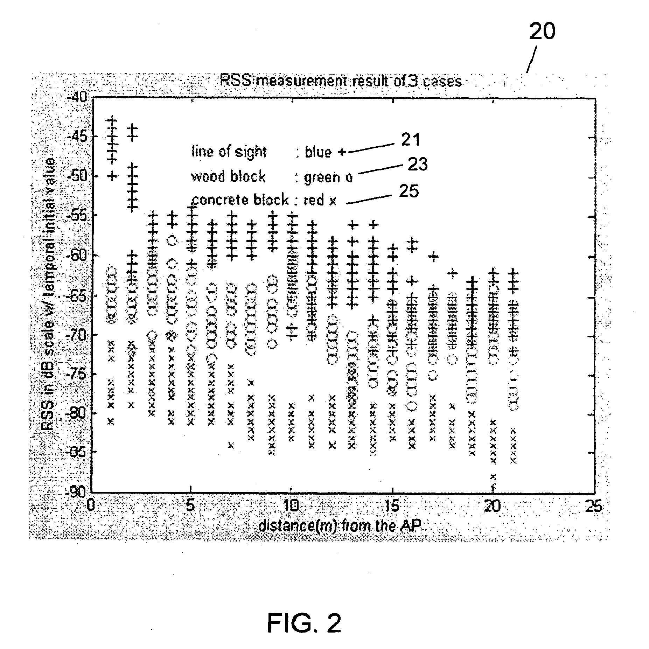

Referring now to FIG. 2, a graph 20 of an RSS measurement for three cases is illustrated, i.e., as represented by symbols 21, 23, and 25. FIG. 2 shows the change of RSSI attenuation when a mobile user terminal passes straight through the coverage of an access point within the coverage radius. In other words, the RSSI attenuation constitutes a logarithmic function, which, irrespective of the medium, changes more slowly when it is closer to the border of the access point, and more sharply when it is closer to the centre of the access point. This can be noted in the graph 20, for example, when the distance is smallest (e.g., near 0 m from the Access Point, AP), the RSSI measurements are more obvious and transparent than the RSSI measurements near the border of the access point (e.g., near 20 m from the AP).

In particular, symbol 21 marked as "line of sight: blue+" represents the change of RSSI attenuation when the mobile user terminal and the AP are in "line of sight," i.e., free of any obstacles. Symbol 23 marked as "wood block: green o" represents change of RSSI attenuation when the mobile user terminal and the AP are separated by "wood block" types of materials, and symbol 25 marked as "concrete block: red x" represents change of RSSI attenuation when the mobile user terminal and the AP are separated by the thickness of "concrete block" type of materials, such as concrete buildings, walls, etc.

In a WLAN, the following formula is considered to best describe the attenuation of the RSSI.

$$RSSI(d) = P_T - PL(d_0) - 10\eta \log \frac{d}{d_0} + X_\sigma \qquad (1)$$

where $P_T$ represents the transmit power, $PL(d_0)$ is the path loss for a reference distance $d_0$, $\eta$ represents the path loss exponent and $X_\sigma$ is a Gaussian random variable with zero mean and $\sigma^2$ variance that models the random variation of the RSSI value.

The formula (1) above describes the attenuation of the RSSI on the mobile user terminal side within a radio environment. This formula may also be applied for the cellular environment as well to describe the relation between the received signal strength as a function of the distance between the mobile user terminal and a base station. However, due to the fact that in a cellular environment, noise is significantly more present and the transmitted power at the base station has large variations, it is not feasible to use the formula in an iterative way. This is due to the fact that the medium-specific parameters may not be neglected. But in a WLAN system, the transmitted power at the access point is relatively constant and the noise oscillation relatively small, which makes it realistic to apply formula (1).

Furthermore, some of the parameters of formula (1) are medium specific, and some means are provided to eliminate most of the parameters with only one parameter remaining, i.e., the path loss exponent. The path loss exponent can be estimated to the value 2.5 because the impact of the path loss exponent to the final estimating value of the speed is small.

For example, if for two distances $d_1$ and $d_2$, the difference between $RSSI(d_1)$ and $RSSI(d_2)$ is computed, due to the fact that in a WLAN environment the transmitted power at the access point is relatively constant and the noise oscillation small, the following formula (2) is obtained:

$$RSSI(d_1) - RSSI(d_2) = 10\eta(\log_{10}\frac{d_2}{d_1} - \log_{10}\frac{d_1}{d_0}) = 10\eta\log_{10}\frac{d_2}{d_1} \qquad (2)$$

The result in formula (2) is independent of the medium-specific parameters $PL(d_0)$, $X_\sigma$, as well as of the transmit power of the access point $P_T$. As mentioned previously, the only medium-specific parameter which remains is the path loss exponent $\eta$. The free space path loss is represented by $\eta = 2$, while the average path loss exponent is 2.5 thus it may be safely assumed that $\eta = 2.5$.

Referring back to FIG. 1, once point "M" mentioned above has been located, a distance $d_M$ between points "O" and "M" can be determined by formula (2). Advantageously, Formula (2) excludes some medium-specific parameters contained in formula (1). For example, the coverage radius of the access point ($d_c$) may be considered to be 100 metres. Using the Pythagora's theorem, the distance ($d$) between points "A" and "M" may be calculated based on $d_c$, and $d_M$. Considering a time $T_M$, taken until the mobile user terminal has reached point "M," the speed may then be expressed by the relation, $v = d/T_M$.

In view of the foregoing, a general process for speed estimation and time estimation has been described. For further computations, a mathematical series theory is used, as described below in (I) through (III):

I. If a series $(x_n)_{n=1,\ldots\ldots N}$ has the property:

$$S_{x_{1,N}} = \sum_{n=1}^{N} x(n) * \sin(-\frac{2\pi n}{N}) < 0 \quad,$$

then series $(x_n)_{n=1,\ldots\ldots N}$ is decreasing [formula (3)]

II. If S > 0, then series $(x_n)_{n=1,\ldots\ldots N}$ is increasing.

III. If two series $(x_n)_{n=1,\ldots\ldots N}$ and $(y_m)_{m=1,\ldots\ldots M}$, then if $S_{x_{1,N}} \geq S_{y_{1,M}}$, series $(x_n)$ has a more pronounced changing trend (either increasing or decreasing) than series $(y_m)$. Additionally, if $S_{x_{1,N}} < S_{y_{1,M}}$, series $(x_n)$ changes more slowly than the series $(y_m)$.

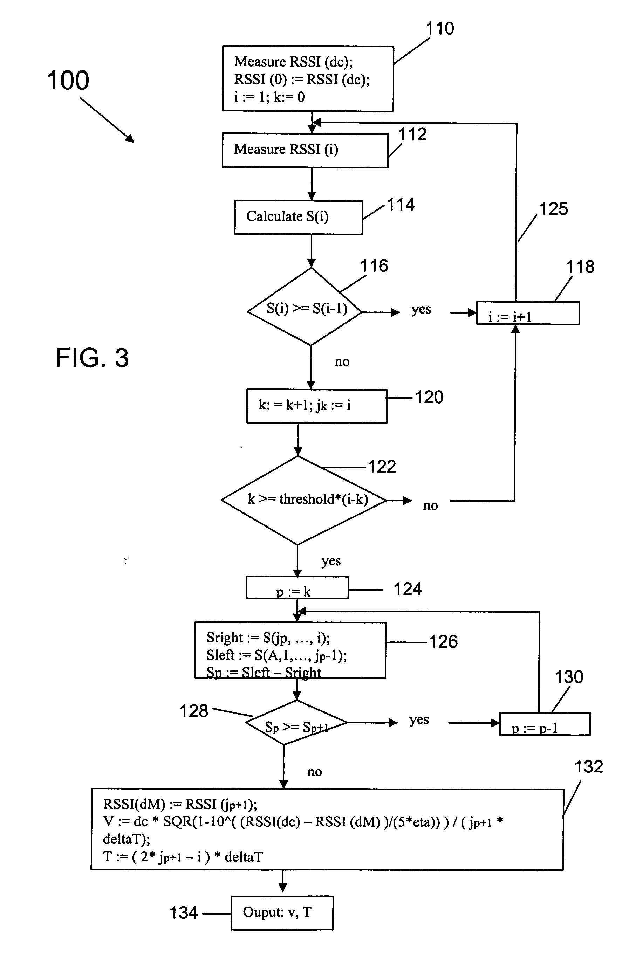

Referring now to FIG. 3, a flowchart 100 shows the steps of a process for estimating the speed of a mobile terminal within a WLAN environment, as well as of estimating the time when the mobile user terminal reaches the coverage border of its current access point. Specifically, flowchart 100 illustrates the sequence of actions necessary in order to determine the exact values of the speed estimation and time estimation processes.

Assuming that the mobile user terminal is currently at point "A" (i.e., attached to the access point "O" as shown in FIG. 1), the distance between the mobile user terminal and point "O" is $d_c$, which, for example, equals 100m. The method of the present invention may be divided into distinct steps.

First, in FIG. 3, step 110, when the mobile user terminal is at point "A" (FIG. 1), the RSSI is measured and stored in a variable *RSSI*. The *RSSI* variable is the RSSI value the mobile user terminal has measured after $i * \Delta T$

milliseconds from the moment the mobile user terminal has attached to the access point "O". At this moment, the mobile user terminal has also memorized the previous RSSI values, i.e., $RSSI_A, RSSI_1,....,RSSI_{i-1}$ (step 112).

Next, the $S_i$ value is computed (step 114). The $S_i$ is the S value as calculated using the formula (3) above, based on the measured values $RSSI_A,RSSI_1,....,RSSI_{i-1},RSSI_i$. In a following step 116, if $S_i >= S_{i-1}$, then the $RSSI_{i+1}$ is measured in a step 118. However, if $S_i < S_{i-1}$ is the case, then the value of $i.(= j_k)$ is retained and a decreasing change in the slope of the measured RSSI values occurs (step 120). If it is the first time when $S_i < S_{i-1}$, then k=1 (step 120).

Thereafter, in steps 122 and 125, the mobile user terminal performs the above mentioned computations (steps 112 through 120) until k >= *threshold* * *(i - k)* [condition (4)]. In this condition (4), *k* represents the number of times when the condition $S_i<S_{i-1}$ is fulfilled, and *i - k* represents the number of times when the condition $S_i >= S_{i-1}$ is met.

Additionally, the *threshold* represents the minimum value of the ratio between the number of times when the RSSI has increased, and the number of times when it has decreased locally. Preferably, a *threshold* of 1/4 may be used, although anything between 1/8 and 1/2 may also be used for the further calculations. As a result, when the condition (4) is satisfied, the RSSI is in a decreasing trend.

Thereafter, in steps 124 through 130, when condition (4) above is satisfied, namely, k >= *threshold* * *(i - k),* the point where an irreversible decreasing change in the trend of the RSSI has occurred can be determined along all the points (*j*), i.e., where a decreasing change in the RSSI slope has taken place. As mentioned above, this point corresponds to the point "M" in the FIG. 1. This point will be the one ($j_p$) in the vector of j elements for which:

$$S_{A,1,...j_p-1} - S_{j_p,j_p+1,...,i} \text{ is maximum (5)}$$

For each $j_p$, in the vector $(j)_{p=k,...,1}$ (starting with p=k and then decreasing it, as shown in step 124), the following computations are carried out (step 126):

$S_{right} = S_{j_p....,i}$ based on the formula (3) above
$S_{left} = S_{A,1,...J_p-1}$ ($S_{A,1,...J_p-1}$ has already been calculated, as above)
$S_p = S_{left} - S_{right}$

If in step 128, $S_p >= S_{p+1}$, then the steps proceed with the next p (step 130).

However, if in step 128, $S_p < S_{p+1}$, then p+1 is retained. The maximum mentioned in the relation (5) above is determined ( = $RSSI_{jp+1}$ ). $RSSI_{jp+1}$, represents the RSSI measurement taken when the mobile user terminal is at the point "M" in FIG. 1.

Next, using the above formula (2), the following is obtained:

$$RSSI(d_c) - RSSI(d_M) = 10\eta(\log_{10}\frac{d_M}{d_0} - \log_{10}\frac{d_c}{d_0}) = 10\eta\log_{10}\frac{d_M}{d_c} \quad (6)$$

In the above, $X_{d_c} - X_{d_M}$ [from formula (1)] is approximated to the value 0. The impact upon the final result of this estimation is small. From here, it can be implied that:

$$d_M = d_C *10\wedge\left[\frac{RSSI(d_c) - RSSI(d_M)}{10\eta}\right] \quad (7)$$

Now, the distance between points "A" and "M" can be approximated by: $\|AM\| = \sqrt{d_c^2 - d_M^2}$ , and the speed of the mobile user terminal can be estimated by $v = \frac{\|AM\|}{T_M}$ , where $T_M$ represents the time for the user terminal to go from point "A" to point "M." Based on the previous terminology and computations, the result is the relation $T_M = j_{p+1} * \Delta T$.

Finally, the formula for the calibration speed $Vc$ is given by the following relation:

$$Vc = \frac{d_c * \sqrt{1-10^\wedge \left[ \dfrac{RSSI(d_c) - RSSI(d_M)}{5\eta} \right]}}{j_{p+1} * \Delta T} \qquad (8)$$

Then, Vc, the calibration speed is used to calculate the speed V:

$$V = V_c \frac{j_{p_c+1} \sqrt{1-10^\wedge \left[ \dfrac{RSSI(d_c) - RSSI(d_M)}{5\eta} \right]}}{j_{p+1} \sqrt{1-10^\wedge \left[ \dfrac{RSSI(d_c) - RSSI(d_{Mc})}{5\eta} \right]}} \qquad (8A)$$

In the above equation (8A), neither $d_M$ nor the distance AM is required to arrive at the computation of the speed V.

As described above, in FIG. 3, in a step 132, the $RSSI(d_M)$ is first computed and then $V$ is obtained. Furthermore, from the moment when the RSSI measurement has been stopped, a time T is computed representing the time it would take for the mobile user terminal to reach the coverage of that access point. Because the triangle joining points "A","O", "B" is an isosceles, and $OM \perp AB$ , we have the relation $\|AM\|=\|MB\|$, and then T may be computed by the following formula:

$$T = 2 * T_M - i * \Delta T \qquad (9)$$

Consequently, the flowchart 100 provides the estimated speed and time in a step 134. In the T expression above, no reference has been made to the any of the medium-specific parameters, therefore the result has a very high degree of accuracy.

If all the above processing and computations are carried out in the mobile user terminal, then the mobile user terminal may consider the estimated time that it can remain in the current access point, and take preemptive actions, i.e., such as handing over to a different network before critical coverage is lost. Therefore, the sequence of steps and computations of flowchart 100 may be easily mapped into a conceptual software to be implemented on a mobile user terminal device.

While there has been illustrated and described what are presently considered to be the preferred embodiments of the present invention, it will be understood by those of ordinary skill in the art that various other modifications may be made, and equivalents may be substituted, without departing from the true scope of the present invention.

In particular, although the foregoing description related mostly to processing performed at the terminal level, the speed and time estimation described herein can be applied in a situation where the terminal sends the measured RSSI values to a component in the network or a system module, which makes the above calculations for the respective mobile terminal and based on the estimated time left for the user in the current access point, makes the computations and processing necessary to implement QoS decisions, *inter alia,* such as when to handover the user to a different network.

Additionally, many advanced modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the appended claims and their equivalents.

**Claims**

1. Method of estimating a speed of a mobile user terminal, said terminal positioned in a first point (A) associated with at least one access point (O) in a RF coverage radius (12), having a first distance ($d_C$) between the first point and the at least one access point, wherein the user terminal has a trajectory (14), said terminal experiencing a received signal level along the trajectory, **characterized in that** the method comprises:

- performing periodic measurements of the received signal level of the terminal along the trajectory, wherein the received signal level comprises its strength indication;
- determining a second point (M), wherein the second point is the closest point of the terminal to the at least one access point along the trajectory, said second point comprising a maximum value for the received signal level; and
- computing the speed of the mobile user terminal.

2. The method according to claim 1, further comprising estimating a second distance ($d_M$) between the at least one access point (O) and the second point (M) along the trajectory of the terminal, using the received signal level of the first point (A) and the second point (M) and the first distance ($d_C$), computing the distance (AM) between the first point (A) and the second point (M) based on the first distance (dc) and the strength indications at the first and second points, and computing the speed of the user terminal based on the first distance ($d_C$) and the strength indications at the first and second points.

3. The method according to claim 1 or 2, further comprising computing a time ($T$) when the mobile user terminal would reach at least one coverage border (B) of the at least one access point.

4. The method according to any one of the preceding claims, wherein a time ($T$) is given by the relation $T = 2*T_M - i*\Delta T$, wherein $T$ represents the time it takes from the moment the mobile user terminal has stopped performing signal measurements until the moment when the mobile user terminal reaches the at least one coverage border of the access point, i represents the number of signal measurements performed by the mobile user terminal, $\Delta T$ represents the time between two consecutive measurements, $T_M$ represents a time when the terminal has reached the second point, and the time $T$ is independent of any medium specific parameters.

5. The method according to any of the preceding claims, comprising analyzing the attenuation of the received signal level of the terminal along the trajectory, using a mathematical series theory to determine the second point by determining whether the received signal level is increasing or decreasing.

6. The method according to any of the preceding claims, wherein computing the speed of the mobile user terminal comprises calculating the speed V by the relation: $$V = \frac{d_c * \sqrt{1 - 10^{\left[\frac{RSSI(d_c) - RSSI(d_M)}{5\eta}\right]}}}{j_{p+1} * \Delta T},$$ wherein

$\eta$ comprises the medium-specific parameter path loss exponent , $j_{p+1}$ represents the number of measurements performed by the terminal from the first point to the second point, $\Delta T$ represents the time between two consecutive measurements.

7. The method according to any of the preceding claims, further comprising transmitting from the terminal the measured received signal level to a wireless network component, said network component which computes the speed of the mobile user terminal, and estimates the time ($T$) when the mobile user terminal would reach at least one coverage border (B) of the at least one access point.

8. A computer readable medium associated with a device having a sequence of instructions stored thereon which, when executed by a microprocessor of the device, causes the processor to implement the steps of the method according to claims 1-7.

9. A system configured to estimate a speed of a mobile user terminal, said terminal positioned in a first point (A) associated with at least one access point (O) in a RF coverage radius, having a first distance ($d_C$) between the first point and the at least one access point, wherein the user terminal has a trajectory (14), said terminal experiencing a received signal level along the trajectory, **characterized in that** the system comprises a mobile element configured to perform periodic measurements of the received signal level of the terminal along the trajectory, wherein the received signal level comprises its strength indication; determine a second point (M), wherein the second point is the closest point of the terminal to the at least one access point along the trajectory, said second point comprising a maximum value for the received signal level; and compute the speed of the mobile user terminal.

FIG. 1

EP 1 830 200 A1

FIG. 2

10

100

FIG. 3

110

Measure RSSI (dc);
RSSI (0) := RSSI (dc);
i := 1; k:= 0

112

Measure RSSI (i)

114

Calculate S(i)

116

S(i) >= S(i-1)  →  yes

no

125

118

i := i+1

120

k: = k+1; jk := i

122

k >= threshold*(i-k)  →  no

yes

124

p := k

126

Sright := S(jp, ..., i);
Sleft := S(A,1,..., jp-1);
Sp := Sleft – Sright

128

Sp >= Sp+1  →  yes

130

p := p-1

no

132

RSSI(dM) := RSSI (jp+1);
V := dc * SQR(1-10^( (RSSI(dc) – RSSI (dM) )/(5*eta)) ) / ( jp+1 *
deltaT);
T := ( 2* jp+1 – i ) * deltaT

134 — Ouput: v, T

**European Patent Office**

## EUROPEAN SEARCH REPORT

Application Number

EP 06 29 0355

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/076964 A (TELEFONAKTIEBOLAGET LM ERICSSON; BROUWER, FRANK, BASTIAAN) 18 September 2003 (2003-09-18) * figure 2 * * page 5, line 16 - line 18 * * page 6, line 11 - line 14 * ----- | 1,8,9 | INV. G01S11/06 |
| A | US 2004/203905 A1 (CUFFARO ANGELO) 14 October 2004 (2004-10-14) * figure 3 * * paragraph [0014] - paragraph [0033] * ----- | 1,8,9 | |

TECHNICAL FIELDS SEARCHED (IPC)

G01S

The present search report has been drawn up for all claims

| Place of search | Date of completion of the search | Examiner |
|---|---|---|
| The Hague | 18 August 2006 | Niemeijer, R |

**ANNEX TO THE EUROPEAN SEARCH REPORT
ON EUROPEAN PATENT APPLICATION NO.**                    EP 06 29 0355

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2006

| Patent document cited in search report | | Publication date | Patent family member(s) | | Publication date |
|---|---|---|---|---|---|
| WO 03076964 | A | 18-09-2003 | AU | 2002239150 A1 | 22-09-2003 |
| | | | EP | 1483598 A1 | 08-12-2004 |
| | | | JP | 2005520376 T | 07-07-2005 |
| | | | US | 2005095989 A1 | 05-05-2005 |
| US 2004203905 | A1 | 14-10-2004 | AU | 2003245695 A1 | 19-01-2004 |
| | | | CA | 2490946 A1 | 08-01-2004 |
| | | | CN | 1663299 A | 31-08-2005 |
| | | | EP | 1527621 A1 | 04-05-2005 |
| | | | JP | 2005531985 T | 20-10-2005 |
| | | | WO | 2004004377 A1 | 08-01-2004 |
| | | | US | 2006052114 A1 | 09-03-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002068581 A